# EUROPEAN PATENT SPECIFICATION

(11) **EP 4 581 442 B1**
(45) Date of publication and mention of the grant of the patent: **17.06.2026**
(21) Application number: 22772947.2
(22) Date of filing: 02.09.2022
(51) Int. Cl.: G05D 1/646, G05D 1/247, G05D 105/28, G05D 107/90, G05D 109/10, G05D 111/30

(54) **A CONTROL SYSTEM FOR CONTROLLING AUTONOMOUS OPERATION OF AN AUTONOMOUS VEHICLE IN AN AREA**
STEUERUNGSSYSTEM ZUR STEUERUNG DES AUTONOMEN BETRIEBS EINES AUTONOMEN FAHRZEUGS IN EINEM BEREICH
SYSTÈME DE COMMANDE POUR COMMANDER LE FONCTIONNEMENT AUTONOME D'UN VÉHICULE AUTONOME DANS UNE ZONE

(43) Date of publication of application: 09.07.2025
(73) Proprietor: Volvo Autonomous Solutions AB, 405 08 Göteborg (SE)
(72) Inventor: HAGVALL, Linus, 418 74 Göteborg (SE); BERGQUIST, Stefan, 417 27 Göteborg (SE)
(74) Representative: Kransell & Wennborg KB
(86) International application number: PCT/EP2022/074502
(87) International publication number: WO 2024/046583

(56) References cited:
- US-A1- 2011 063 443
- US-A1- 2011 153 338
- US-A1- 2019 163 188
- US-A1- 2022 244 735

## Description

### TECHNICAL FIELD

The invention relates to a control system for controlling autonomous operation of an autonomous vehicle in an area. The invention also relates to an anchor point device, an autonomous vehicle, a computer-implemented method for controlling autonomous operation of an autonomous vehicle in an area, a computer program and a computer readable medium.

The invention can be applied in heavy-duty vehicles, such as trucks, buses and construction equipment. Although the invention will be described with respect to a truck, the invention is not restricted to this particular vehicle, but may also be used in other vehicles such as dump trucks, wheel loaders, excavators, buses and passenger cars.

### BACKGROUND

An autonomous vehicle may be defined as a vehicle which can at least partly be driven automatically without any direct human involvement. For example, at least one of steering, propulsion and braking may be automatically controlled during driving of the vehicle. The vehicle may be a fully autonomous vehicle, i.e. a completely self-driving vehicle, or a semi-autonomous vehicle. A semi-autonomous vehicle may be defined as a vehicle where at least some human intervention is required during driving.

For example, one or more autonomous vehicles may be used for performing transport missions in a confined area, such as a mining site, logistics centre or port. In such areas, the autonomous vehicle(s) may be configured to follow different travelling paths. The autonomous vehicle may drive automatically in a repetitive manner along the same travelling path(s).

In order to follow the travelling path(s), the autonomous vehicle typically needs to know its position with respect to the travelling path(s) during driving. This may be done by sensors, such as vehicle on-board and/or off-board sensors. For example, the autonomous vehicle may comprise a Global Navigation Satellite System (GNSS) sensor for determining its position. As another example, the autonomous vehicle may use environment perception sensors, such as Light Detection and Ranging (LIDAR) sensors, for determining its position. Any unwanted deviation from the desirable travelling path may be a safety risk for the autonomous vehicle and also for any other entities, such as other vehicles and vulnerable road users (VRU).

US2011063443A1 relates to a cruising surveillance system which comprises a plurality of wireless beacons and an unmanned vehicle. Each of the wireless beacons emits a unique wireless sequential signal. The unmanned vehicle is equipped with an infrared object sensor, a video camera recorder, a wireless transceiving unit, a central processing unit, a driving unit, and a power supply unit. The central processing unit compares the wireless sequential signal received from the wireless transceiving unit, and makes the driving unit to move the unmanned vehicle to cruises along a route defined by the wireless beacons.

US2019163188A1 relates to a materials handling vehicle operating system which comprises a tag layout where a plurality of entry/exit tag sets are arranged along a travel path at different ones of the entry/exit thresholds of a restricted navigation zone.

In view of the above, there is a strive to develop further improved technology relating to autonomous driving of autonomous vehicles.

### SUMMARY

Therefore, an object of the invention is to provide a control system for controlling autonomous operation of an autonomous vehicle in an area, which control system alleviates at least one drawback of the prior art, or which at least provides a suitable alternative. Yet further objects of the invention are to provide an anchor point device, an autonomous vehicle, a computer-implemented method for controlling autonomous operation of an autonomous vehicle in an area, a computer program and/or a computer readable medium, which alleviate at least one drawback of the prior art, or which at least provides suitable alternatives.

According to a first aspect of the invention, the object is achieved by a control system according to claim 1.

Hence, there is provided control system for controlling autonomous operation of an autonomous vehicle in an area. The control system comprises:
- a control unit for planning a desired travelling path for the autonomous vehicle,
- a plurality of anchor point devices,
- wherein each anchor point device is arranged to be provided along the desired travelling path, wherein the control unit is configured to plan the desired travelling path by use of position information related to each anchor point device of the plurality of anchor point devices, and wherein each anchor point device comprises an information providing device which is configured to provide information to the autonomous vehicle when the autonomous vehicle is within a first range from each anchor point device during travelling along the desired travelling path, and
- wherein at least one of the plurality of anchor point devices is configured to be movable in the area.

By the provision of a control system according to the first aspect of the invention, a versatile, flexible and high precision control system for autonomous vehicle operation is provided. For example, the present invention is based on a realization that by using anchor point devices as disclosed herein for navigation along the travelling path, high integrity position determination with respect to the desired travelling path will be provided. In addition, the present invention is based on a realization that at least one of the anchor point devices is advantageously a movable anchor point device. Accordingly, the at least one movable anchor point device can be moved from one place to another place in the area. This results in several benefits. In particular, the at least one movable anchor point device provides increased flexibility for the control system. For example, increased flexibility is achieved in that the at least one movable anchor point device allows to modify the desired travelling path. At the same time, it also provides high integrity position determination with respect to the modified travelling path. More particularly, it has further been realized that on some occasions it may be desirable to use one or more new or modified travelling paths instead of the previously used travelling path(s). For example, a mining site, a construction site, a logistics center, etc., may evolve over time. Consequently, there may be a need to travel along new travelling paths when the area has evolved. By use of the at least one movable anchor point device, the control system can swiftly update the desired travelling path once the movable anchor point device has been moved to a new position. Moreover, the information provided to the autonomous vehicle when it is within the first range of each anchor point device can advantageously be used to verify that the autonomous vehicle is following the desired travelling path. Accordingly, it can be determined with high integrity that the autonomous vehicle is following the desired travelling path. In view of the above, a versatile, flexible and high precision control system for autonomous vehicle operation is provided.

The at least one movable anchor point device comprises:
- a positioning unit arranged to estimate a current position of the at least one movable anchor point device in the area, and
- a communication unit arranged to provide the estimated current position to the control unit.

Thereby, the current position of the at least one movable anchor point device can be quickly and reliably updated after it has been moved from one position to a new position. Accordingly, this implies fast and reliable modification of the travelling path.

Optionally, the at least one movable anchor point device comprises at least one first grip grippable by a human and/or at least one second grip grippable by a gripping device for lifting and moving the at least one movable anchor point device in the area. This implies facilitated moving of the at least one movable anchor point device. The at least one first grip may for example be a handle, i.e. a grip adapted for a human hand. The at least one second grip may for example be a grip adapted for a gripping device of a working machine, e.g. a crane vehicle, a wheel loader, an excavator or the like. For example, the at least one second grip may be a grip which is adapted to be gripped by a claw member, a hook, a magnetic device etc.

Optionally, the control system is configured so that the information provided to the autonomous vehicle from the information providing device of at least one anchor point device, such as from the information providing device of the at least one movable anchor point device, is used for localizing the autonomous vehicle along the desired travelling path. Thereby, improved navigation of the autonomous vehicle along the desired travelling path is achieved. By localizing is herein meant to estimate a position or pose of the autonomous vehicle with respect to a reference, i.e. with respect to an anchor point device and hence the desired travelling path. A pose means position and orientation of the autonomous vehicle with respect to a reference.

Optionally, the control system is configured so that the information provided to the autonomous vehicle from the information providing device of at least one anchor point device, such as from the information providing device of the at least one movable anchor point device, is used for verifying that the autonomous vehicle is travelling along the desired travelling path. Thereby, it can be determined with high integrity during driving if the autonomous vehicle is actually following the desired travelling path or not. If the autonomous vehicle during travelling along the desired travelling path does not receive any information from an anchor point device when it is within the first range, this can be used as an indication that something is wrong. When this situation occurs, the autonomous vehicle may be configured to stop driving, e.g. by an emergency stop.

Optionally, the control system is configured so that the information provided to the autonomous vehicle from the information providing device of at least one anchor point device, such as from the information providing device of the at least one movable anchor point device, is associated with a speed limit for the autonomous vehicle. Thereby, further improved control of the autonomous vehicle is achieved. For example, by said configuration it can be assured that the autonomous vehicle will be able to adapt its speed or verify its current speed when it is within the first range from the at least one anchor point device. For example, if the at least one anchor point device is movable as disclosed herein, moving the movable anchor point device may be done for modifying a speed limit zone in the area. As such, this implies a more versatile and flexible control system.

Optionally, the control system is configured so that the information provided to the autonomous vehicle from the information providing device of at least one anchor point device, such as from the information providing device of the at least one movable anchor point device, is associated with a specific mission and/or driving mode for the autonomous vehicle. Thereby, further improved control of the autonomous vehicle is achieved. For example, the specific mission may be a mission to drive a load from one point to another point in the area. The information associated with the specific mission may comprise a mission instruction, such as an instruction to load or unload the load. Still further, the driving mode may be indicative of operating the autonomous vehicle with specific vehicle systems active. For example, one driving mode may be to activate lights of the autonomous vehicle when it enters a tunnel. In a similar manner, another driving mode may be to deactivate lights when the autonomous vehicle exits a tunnel. A yet further example of a driving mode is a mode where a particular type of sensor, or group of sensors, is used for the navigation. For example, if the at least one anchor point device is movable as disclosed herein, moving the movable anchor point device may be done for modifying a zone in the area where the specific mission and/or driving mode shall be utilized. As such, this implies a more versatile and flexible control system.

Optionally, the control system is configured so that the information provided to the autonomous vehicle from the information providing device of at least one anchor point device, such as from the information providing device of the at least one movable anchor point device, is associated with a restricted area for the autonomous vehicle. Thereby, further improved control of the autonomous vehicle is achieved. For example, this prevents the autonomous vehicle from driving into the restricted area. In particular, if the at least one anchor point device is movable as disclosed herein, moving the movable anchor point device may be done for modifying a restricted area for the autonomous vehicle. As such, this implies a more versatile and flexible control system.

Optionally, the control system is configured to utilize an active mode and a reconfiguring mode, wherein in the active mode, autonomous operation of the autonomous vehicle is allowed and, in the reconfiguring mode, the autonomous vehicle is prevented from autonomous operation, wherein in the reconfiguring mode the at least one movable anchor point device is allowed to be moved. This implies improved safety. More particularly, by utilizing the active mode and the reconfiguring mode, it can be assured that the autonomous vehicle is not in operation when e.g. the desired travelling path is updated.

Optionally, the control system is configured to be allowed to switch from the reconfiguring mode to the active mode only after the control unit has received an updated estimated current position from the communication unit. Accordingly, receiving an updated estimated current position from the communication unit may imply that the autonomous vehicle is ready for operation again. As such, this implies further improved safety.

Optionally, the control unit is configured to only allow use of the position information of the at least one movable anchor point device when it is provided in a sub-area within the area. Thereby, it can for example be assured that an updated travelling path is not traversing a restricted zone and/or a zone in the area which is not suitable for autonomous driving. Hence, this implies improved safety and control of the autonomous vehicle.

Optionally, the control unit is configured to only allow use of the position information of the at least one movable anchor point device when it is provided within a second range from another one of the plurality of anchor point devices. For example, the control unit may comprise at least two movable anchor point devices, and the control unit may be configured to only allow use of the position information of a second one of the at least two movable anchor point devices when it is provided within the second range from a first one of the at least two movable anchor point devices. It has been realized that further improved control of the autonomous vehicle can be achieved by using a relative position with respect to a position of another anchor point device. In particular, using said relative position implies improved safety. For example, autonomous operation may be prohibited if it is determined that the at least one movable anchor point device is not provided within the second range from the other one of the plurality of anchor point devices. By way of example, the other one of the plurality of anchor point devices may be any other one of the plurality of anchor point devices. Accordingly, if no other anchor point device is provided within the second range, use of the position information may not be allowed. Additionally, or alternatively, if no other anchor point device is provided within the second range, autonomous operation may be prohibited.

Optionally, when the autonomous vehicle is in an autonomous operation mode, the control unit is configured to issue a warning signal to the autonomous vehicle, such as a signal indicative of stopping the autonomous vehicle, when it is determined that the at least one movable anchor point device has been moved to a new position. Thereby, further improved safety is achieved. The autonomous operation mode may correspond to the above-mentioned active mode of the control system.

Optionally, in response to the control unit receiving an updated estimated position from the communication unit of the at least one movable anchor point device, the control unit is configured to replan the desired travelling path so that a new desired travelling path for the autonomous vehicle is obtained. The control unit may further be adapted to communicate the new desired travelling path to the autonomous vehicle.

Optionally, the information providing device is any one of a transmitter device, a transponder device, a transceiver, and a machine-readable device, such as a barcode or QR code.

According to a second aspect of the invention, the object is achieved by an anchor point device according to claim 11.

Hence, there is provided an anchor point device for a control system for controlling autonomous operation of an autonomous vehicle in an area, wherein the anchor point device is arranged to be provided along a desired travelling path and wherein the anchor point device comprises an information providing device which is configured to provide information to the autonomous vehicle when the autonomous vehicle is within a first range from the anchor point device during travelling along the desired travelling path, and wherein the anchor point device is configured to be movable in the area.

Advantages and effects of the second aspect of the invention are largely analogous to the advantages and effects of the first aspect of the invention. It shall also be noted that all embodiments of the second aspect of the invention are combinable with all embodiments of the first aspect of the invention, and vice versa.

The movable anchor point device comprises:
- a positioning unit arranged to estimate a current position of the at least one movable anchor point device in the area, and
- a communication unit arranged to provide the estimated current position to a control unit.

Optionally, the movable anchor point device further comprises an electric energy storage device and/or a power generation device for powering the positioning unit and the communication unit.

Optionally, the movable anchor point device further comprises at least one first grip grippable by a human and/or at least one second grip grippable by a gripping device for lifting and moving the at least one movable anchor point device in the area.

According to a third aspect of the invention, the object is achieved by an autonomous vehicle according to claim 12.

Hence, there is provided an autonomous vehicle which is configured to be controlled by a control system according to any one of the embodiments of the first aspect of the invention.

Advantages and effects of the third aspect of the invention are largely analogous to the advantages and effects of the first and second aspects of the invention. It shall also be noted that all embodiments of the first and second aspects of the invention are combinable with all embodiments of the third aspect of the invention, and vice versa.

For example, the autonomous vehicle may be configured to prohibit autonomous operation when the control system utilizes the reconfiguring mode as mentioned in the above. Additionally, or alternatively, the autonomous vehicle may be configured to allow autonomous operation when the control system utilizes the active mode as mentioned in the above. Still further, as another example, when the autonomous vehicle is in an autonomous operation mode, the autonomous vehicle may be configured to stop when it is determined that the at least one movable anchor point device has been moved to a new position.

The autonomous vehicle preferably comprises a vehicle motion control unit for automatically driving the autonomous vehicle along a travelling path. The vehicle motion control unit may be configured to issue control signals to one or more actuators for controlling steering, propulsion and/or braking of the autonomous vehicle.

Optionally, the autonomous vehicle is configured to use information from the information providing device of the at least one movable anchor point device for localizing the autonomous vehicle along the desired travelling path, for verifying that the autonomous vehicle is travelling along the desired travelling path, for adapting its speed or verify its current speed, for initiating a specific mission and/or driving mode for the autonomous vehicle, and/or for preventing the autonomous vehicle from driving into a restricted area.

According to a fourth aspect of the invention, the object is achieved by a computer-implemented method according to claim 13.

Hence, there is provided a computer-implemented method for controlling autonomous operation of an autonomous vehicle in an area by a control system according to any one of embodiments of the first aspect of the invention. The method comprises:
- planning a desired travelling path for the autonomous vehicle by use of position information related to each anchor point device of the plurality of anchor point devices.

Advantages and effects of the fourth aspect of the invention are largely analogous to the advantages and effects of the first, second and third aspects of the invention. It shall also be noted that all embodiments of the first, second and third aspects of the invention are combinable with all embodiments of the fourth aspect of the invention, and vice versa.

Optionally, the method comprises:
- providing the desired travelling path to a vehicle motion control unit of the autonomous vehicle and/or providing guiding instructions for the autonomous vehicle so that it follows the desired travelling path.

Optionally, the method comprises:
- estimating a current position of the at least one movable anchor point device in the area by use of a positioning unit of the at least one movable anchor point device, and
- providing the estimated current position to the control unit by use of a communication unit of the at least one movable anchor point device.

Optionally, the method comprises:
- providing information to the autonomous vehicle from the information providing device of at least one anchor point device, such as from the information providing device of the at least one movable anchor point device, and
- localizing the autonomous vehicle along the desired travelling path by use of the provided information.

Optionally, the method comprises:
- providing information to the autonomous vehicle from the information providing device of at least one anchor point device, such as from the information providing device of the at least one movable anchor point device, wherein the information is associated with a speed limit for the autonomous vehicle, and
- setting the speed limit as a maximum allowed speed for the autonomous vehicle.

Optionally, the method comprises:
- providing information to the autonomous vehicle from the information providing device of at least one anchor point device, such as from the information providing device of the at least one movable anchor point device, wherein the information is associated with a specific mission and/or driving mode for the autonomous vehicle, and
- initiating the specific mission and/or driving mode.

Optionally, the method comprises:
- providing information to the autonomous vehicle from the information providing device of at least one anchor point device, such as from the information providing device of the at least one movable anchor point device, wherein the information is associated with a restricted area for the autonomous vehicle, and
- preventing the autonomous vehicle from driving in the restricted area.

Optionally, the method comprises:
- utilizing an active mode and a reconfiguring mode, wherein the active mode comprises allowing autonomous operation of the autonomous vehicle, and wherein the reconfiguring mode comprises preventing the autonomous vehicle from autonomous operation, wherein in the reconfiguring mode the at least one movable anchor point device is allowed to be moved.

Optionally, the method comprises:
- switching from the reconfiguring mode to the active mode only after the control unit has received an updated estimated current position from the communication unit.

Optionally, the method comprises:
- only allowing use of the position information of the at least one movable anchor point device when it is provided in a sub-area within the area.

Optionally, the method comprises:
- only allowing use of the position information of the at least one movable anchor point device when it is provided within a second range from another one of the plurality of anchor point devices.

The second range as disclosed herein may be different from the first range, such as longer or shorter. Alternatively, the second range may be similar or equal to the first range as disclosed herein.

Optionally, the method comprises:
- when the autonomous vehicle is in an autonomous operation mode, issuing a warning signal to the autonomous vehicle, such as a signal indicative of stopping the autonomous vehicle, when it is determined that the at least one movable anchor point device has been moved to a new position.

Optionally, the method comprises:
- in response to receiving an updated estimated position from the communication unit of the at least one movable anchor point device, replanning the desired travelling path so that a new desired travelling path for the autonomous vehicle is obtained.

According to a fifth aspect of the invention, the object is achieved by a computer program according to claim 14.

Hence, there is provided a computer program comprising program code means for performing the method according to any one of the embodiments of the fourth aspect of the invention when said program is run on a control unit.

According to a sixth aspect of the invention, the object is achieved by a computer readable medium according to claim 15.

Hence, there is provided a computer readable medium carrying a computer program comprising program code means for performing the method according to any one of the embodiments of the fourth aspect of the invention when said program product is run on a control unit.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of an autonomous vehicle according to an example embodiment of the present invention,
Fig. 2a is a schematic view of an area in which an autonomous vehicle is operating,
Fig. 2b is another schematic view of the area shown in fig. 2a,
Fig. 3 is a flowchart of a method according to example embodiments of the present invention,
Fig. 4 is a schematic view of a control system according to example embodiments of the present invention, and
Fig. 5 is a schematic view of an anchor point device according to example embodiments of the invention.

It shall be understood that the embodiments shown and described are exemplifying and that the invention is not limited to these embodiments. It shall also be noted that some details in the drawings may be exaggerated in order to better describe and illustrate the invention. Like reference characters throughout the drawings refer to the same, or similar, type of element unless expressed otherwise.

### DETAILED DESCRIPTION OF EXAMPLE EMBODIMENTS OF THE INVENTION

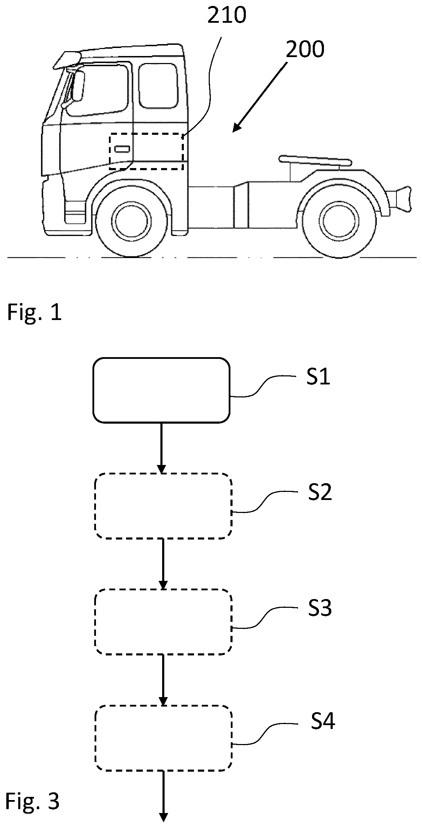

Fig. 1 depicts an autonomous vehicle 200 according to an example embodiment of the present invention. The autonomous vehicle 200 is in this example a truck, more particularly a towing truck for towing one or more trailers (not shown). It shall however be understood that the invention is not limited to only this type of vehicle, but may be used in any other vehicle, such as a bus, a wheel loader, an excavator, a dump-truck and a passenger car. The shown vehicle 200 comprises a driver cabin. However, the autonomous vehicle according to the invention may also be a vehicle which is free from any driver cabin. The autonomous vehicle 200 may as shown comprise a vehicle motion control unit 210 for controlling autonomous operation of the vehicle 200. The vehicle motion control unit 210 may be configured to issue control signals to one or more actuators (not shown) for controlling steering, propulsion and/or braking of the autonomous vehicle 200.

Accordingly, the vehicle motion control unit 210 may include a microprocessor, microcontroller, programmable digital signal processor or another programmable device. The vehicle motion control unit 210 may also, or instead, include an application specific integrated circuit, a programmable gate array or programmable array logic, a programmable logic device, or a digital signal processor. Where the vehicle motion control unit 210 includes a programmable device such as the microprocessor, microcontroller or programmable digital signal processor mentioned above, the processor may further include computer executable code that controls operation of the programmable device. The vehicle motion control unit 210 may comprise embedded hardware, sometimes with integrated software. Examples of physical relationships are: shared casing and components mounted on one or several circuit boards. Further, the vehicle motion control unit 210 may be any kind of control unit, and it may also comprise more than one control unit, i.e. the control unit may be configured by two or more sub-control units, which may be provided close to each other or be separated from each other. In some embodiments, the vehicle motion control unit 210 may be denoted a computer.

The autonomous vehicle 200 may further comprises a sensor, or group of sensors, (not shown) to localize the autonomous vehicle 200 during driving. By localizing is meant to determine a position or pose of the vehicle 200 with respect to a reference. For example, the vehicle 200 may comprise a GNSS sensor, an environment perception sensor, such as a LIDAR sensor, a camera, a radio detection and ranging (RADAR) sensor, an ultrasonic sensor, or the like, for localizing.

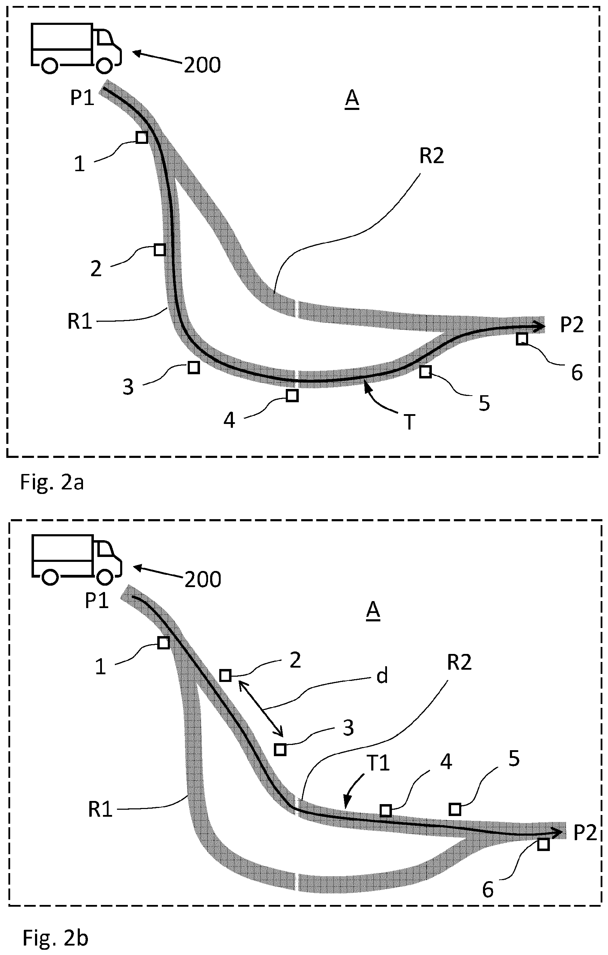

Figs. 2a and 2b depicts an area A, which may be a confined area A, in which an autonomous vehicle 200 is operating. The autonomous vehicle 200 may for example be the vehicle 200 as shown in fig. 1.

As depicted in fig. 2a, the autonomous vehicle 200 is arranged to follow a desired travelling path T. A plurality of anchor point devices 1, 2, 3, 4, 5, 6 are provided along the desired travelling path.

In addition, or as an alternative, to the above-mentioned sensor, or group of sensors, the autonomous vehicle 200 may use the plurality of anchor point devices 1, 2, 3, 4, 5, 6 for localizing the autonomous vehicle 200 during driving along the desired travelling path T.

More particularly, the autonomous vehicle 200 may be arranged to detect an anchor point device 1, 2, 3, 4, 5, 6 by receiving information from the anchor point device 1, 2, 3, 4, 5, 6 when the autonomous vehicle 200 is within a first range from each respective anchor point device 1, 2, 3, 4, 5, 6. The first range may be any range, such as from 0 to 50 meters, e.g. 1-10 meters. By detecting the anchor point device 1, 2, 3, 4, 5, 6, within the first range, the autonomous vehicle 200 may for example be able to determine its position with respect to the desired travelling path T. Additionally, or alternatively, by detecting the anchor point device 1, 2, 3, 4, 5, 6, within the first range, the autonomous vehicle 200 may be able to verify with high integrity that the autonomous vehicle 200 is travelling along the desired travelling path T.

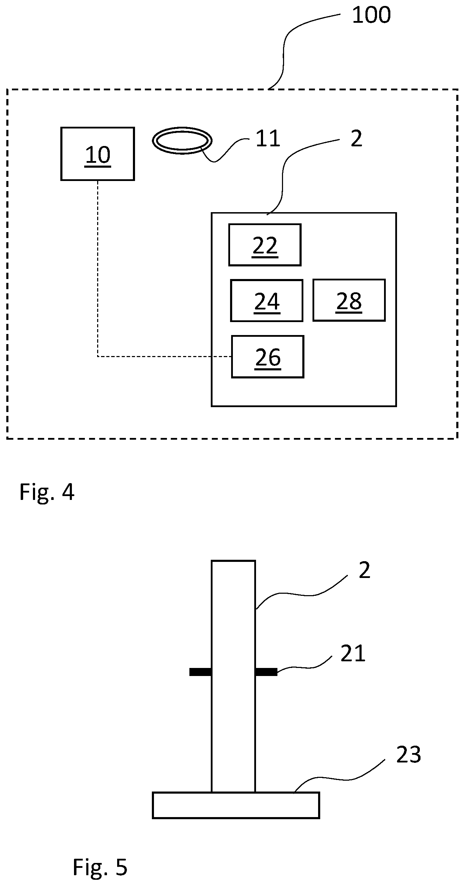

Fig. 4 depicts a schematic illustration of a control system 100 according to example embodiments of the present invention, i.e. a control system 100 for controlling autonomous operation of an autonomous vehicle 200 in an area A. The control system 100 comprises a control unit 10 and a plurality of anchor point devices 2. The control unit 10 is adapted for planning the desired travelling path T, T1 for the autonomous vehicle 200. In fig. 4, only one of the plurality of anchor point devices is shown, i.e. the anchor point device 2 as depicted in figs. 2a and 2b. However, it shall be understood that the control system 100 may include any number of two or more anchor point devices.

In a similar vein as for the vehicle motion control unit 210 mentioned in the above, the control unit 10 of the control system 100 may include a microprocessor, microcontroller, programmable digital signal processor or another programmable device. The control unit 10 may also, or instead, include an application specific integrated circuit, a programmable gate array or programmable array logic, a programmable logic device, or a digital signal processor. Where the control unit 10 includes a programmable device such as the microprocessor, microcontroller or programmable digital signal processor mentioned above, the processor may further include computer executable code that controls operation of the programmable device. The control unit 10 may comprise embedded hardware, sometimes with integrated software. Examples of physical relationships are: shared casing and components mounted on one or several circuit boards. Further, the control unit 10 may be any kind of control unit, and it may also comprise more than one control unit, i.e. the control unit may be configured by two or more sub-control units, which may be provided close to each other or be separated from each other. In some embodiments, the control unit 10 may be denoted a computer.

The control unit 10 and the vehicle motion control unit 210 may be separate units or integrated units, i.e. the control unit 10 and the vehicle motion control unit 210 may be the same unit. The control unit 10 may be remote with respect of the autonomous vehicle 200, such as a remote server or computer. For example, the control unit 10 may be a central control unit for the area A which is adapted to control autonomous operation of a plurality of autonomous vehicles which are operating in the area A.

Each anchor point device 1, 2, 3, 4, 5, 6 is arranged to be provided along the desired travelling path T, T1. The control unit 10 is configured to plan the desired travelling path T, T1 by use of position information related to each anchor point device 1, 2, 3, 4, 5, 6 of the plurality of anchor point devices 1, 2, 3, 4, 5, 6. Furthermore, each anchor point device 1, 2, 3, 4, 5, 6 comprises an information providing device 22 which is configured to provide information to the autonomous vehicle 200 when the autonomous vehicle 200 is within the first range from each anchor point device 1, 2, 3, 4, 5, 6 during travelling along the desired travelling path T, T1.

Furthermore, at least one of the plurality of anchor point devices 2, 3, 4, 5 is configured to be movable in the area A. In the shown embodiments, the anchor point devices 2, 3, 4, 5 are movable in the area A. This is shown in figs. 2a and 2b where the anchor point devices 2, 3, 4, 5 have been moved from one travelling path T in fig 2a to another travelling path T1 in fig. 2b.

As depicted in fig. 4, the at least one movable anchor point device 2, 3, 4, 5 may comprise:
- a positioning unit 24 arranged to estimate a current position of the at least one movable anchor point device 2, 3, 4, 5 in the area A, and
- a communication unit 26 arranged to provide the estimated current position to the control unit 10.

The positioning unit 24 may for example be a GNSS sensor or any other unit for determining a position. The communication unit 26 may be any type of communication unit, such as a unit using wireless and/or wired communication techniques for communicating the estimated current position to the control unit 10. The communication between the communication unit 26 and the control unit 10 is indicated by a dashed line in fig. 4. By way of example, the communication unit 26 may be a telecommunication unit using WiFi, Bluetooth, 3g, 4g, 5g, or any other wireless communication technique.

It shall be noted that any one of the other anchor point devices 1, 6, may comprise similar or the same type of positioning unit and communication unit. The other anchor point devices 1, 6 may be non-movable, i.e. stationary devices.

The control system 100 may be configured so that the information provided to the autonomous vehicle 200 from the information providing device 22 of at least one anchor point device 1, 2, 3, 4, 5, 6, such as from the information providing device 22 of the at least one movable anchor point device 2, 3, 4, 5, is used for localizing the autonomous vehicle 200 along the desired travelling path T.

Additionally, or alternatively, the control system 100 may be configured so that the information provided to the autonomous vehicle 200 from the information providing device 22 of at least one anchor point device 1, 2, 3, 4, 5, 6, such as from the information providing device of the at least one movable anchor point device2, 3, 4, 5, is used for verifying that the autonomous vehicle 200 is travelling along the desired travelling path T.

Additionally, or alternatively, the control system 100 may be configured so that the information provided to the autonomous vehicle 200 from the information providing device 22 of at least one anchor point device 1, 2, 3, 4, 5, 6, such as from the information providing device 22 of the at least one movable anchor point device 2, 3, 4, 5, is associated with a speed limit for the autonomous vehicle 200.

Additionally, or alternatively, the control system 100 may be configured so that the information provided to the autonomous vehicle 200 from the information providing device 22 of at least one anchor point device 1, 2, 3, 4, 5, 6, such as from the information providing device 22 of the at least one movable anchor point device 2, 3, 4, 5, is associated with a specific mission and/or driving mode for the autonomous vehicle 200.

For example, the specific mission may be a mission to drive a load from one point to another point in the area A, e.g. from a position P1 to a position P2 as depicted in figs. 2a and 2b. The information associated with the specific mission may comprise a mission instruction, such as an instruction to load or unload the load. Still further, the driving mode may be indicative of operating the autonomous vehicle 200 with specific vehicle systems active. For example, one driving mode may be to activate lights of the autonomous vehicle 200 when it enters a tunnel (not shown). In a similar manner, another driving mode may be to deactivate lights when the autonomous vehicle 200 exits a tunnel. A yet further example of a driving mode is a mode where a particular type of sensor, or group of sensors, is used for the navigation. For example, moving any one of the movable anchor point devices 2, 3, 4, 5 may be done for modifying a zone in the area A where the specific mission and/or driving mode shall be utilized.

Additionally, or alternatively, the control system 100 may be configured so that the information provided to the autonomous vehicle 200 from the information providing device 22 of at least one anchor point device 1, 2, 3, 4, 5, 6, such as from the information providing device 22 of the at least one movable anchor point device 2, 3, 4, 5, is associated with a restricted area (not shown) for the autonomous vehicle 200. For example, this prevents the autonomous vehicle 200 from driving into the restricted area. In particular, moving the movable anchor point device 2, 3, 4, 5 may be done for modifying a restricted area for the autonomous vehicle 200.

The control system 100 may be configured to utilize an active mode and a reconfiguring mode. In the active mode, autonomous operation of the autonomous vehicle 200 is allowed and, in the reconfiguring mode, the autonomous vehicle 200 is prevented from autonomous operation. In addition, in the reconfiguring mode the at least one movable anchor point device 2, 3, 4, 5 is allowed to be moved.

For example, the control system 100 may be configured to be allowed to switch from the reconfiguring mode to the active mode only after the control unit 10 has received an updated estimated current position from the communication unit 26.

As yet another example, the control unit 10 may be configured to only allow use of the position information of the at least one movable anchor point device 2, 3, 4, 5 when it is provided in a sub-area within the area A. Additionally, or alternatively, the control unit 10 may be configured to only allow use of the position information of the at least one movable anchor point device 2, 3, 4, 5 when it is provided within a second range d (see fig. 2b) from another one of the plurality of anchor point devices 1, 2, 3, 4, 5, 6.

Additionally, or alternatively, when the autonomous vehicle 200 is in an autonomous operation mode, the control unit 10 may be configured to issue a warning signal to the autonomous vehicle 200, such as a signal indicative of stopping the autonomous vehicle 200, when it is determined that the at least one movable anchor point device 2, 3, 4, 5 has been moved to a new position.

Additionally, or alternatively, in response to the control unit 10 receiving an updated estimated position from the communication unit 26 of the at least one movable anchor point device 2, 3, 4, 5, the control unit 10 may be configured to replan the desired travelling path T so that a new desired travelling path T1 for the autonomous vehicle 200 is obtained. Accordingly, as shown in figs. 2a and 2b, the travelling path T is replanned so that a new travelling path T1 is obtained after the movable anchor point devices 2, 3, 4, 5, have been moved. For example, a first road stretch R1 associated with the travelling path T may be unavailable, such as due to construction work, whereby a user can move the movable anchor point devices 2, 3, 4, 5 to another road stretch R2 which is free from any construction work.

The information providing device 22 may be any one of a transmitter device, a transponder device, a transceiver and a machine-readable device, such as a barcode or QR code. Accordingly, the autonomous vehicle 200 typically comprises a corresponding device (not shown) for reading and/or receiving the information provided by the information providing device 22. Accordingly, the corresponding device may be a receiver device for receiving a signal from the information providing device 22. Additionally, or alternatively, the corresponding device may be a sensor for reading machine-readable code, such as for reading a barcode or QR code. The information obtained by the corresponding device may be used for path verification, localizing, speed limit control etc. as mentioned in the above. For example, the information from the information providing device 22 may be a unique identifier for each anchor point device 1, 2, 3, 4, 5, 6. Accordingly, by way of example, by use of the unique identifier, the autonomous vehicle 200 can e.g. determine which anchor point device 1, 2, 3, 4, 5, 6 that has been detected within the first range. In addition, the information providing device 22 may be a passive device, such as an RFID tag and the above mentioned QR code and barcode.

Fig. 5 depicts schematically an example of a movable anchor point device 2. As shown, the movable anchor point device 2 may be formed as a pole, with a base 23 adapted to be supported on a ground surface (not shown). It shall be noted that the movable anchor point device 2 may have any type of shape and be of any size. The movable anchor point device 2 may also be denoted a movable landmark device for the autonomous vehicle 200. Similarly, a stationary anchor point device 1, 6 may be denoted a stationary landmark device. By anchor point is herein meant that the anchor point device 1, 2, 3, 4, 5, 6 may be used as a point for planning the desired travelling path T and/or for verifying that the autonomous vehicle 200 is following the desired travelling path T during autonomous driving. Additionally, or alternatively, the anchor point device 1, 2, 3, 4, 5, 6 may be used for control and/or navigation of the autonomous vehicle 200 when it is driving along the desired travelling path T, T1.

As depicted, the at least one movable anchor point device 2 may comprise at least one first grip 21 grippable by a human and/or at least one second grip 21 grippable by a gripping device for lifting and moving the at least one movable anchor point device 2 in the area A. In the shown example, the grip 21 is a handle which is grippable by a human and by a gripping device, such as by a claw member or a hook.

The movable anchor point device 2 as shown in fig. 5 may be the anchor point device 2 as shown in fig. 4 and in figs. 2a and 2b. Accordingly, the movable anchor point device 2 is arranged to be provided along the travelling paths T, T1.

In addition to the above-mentioned positioning unit 24 and a communication unit 26, the movable anchor point device 2 may further comprise an electric energy storage device 28 and/or a power generation device 28 for powering the positioning unit 24 and the communication unit 26. Accordingly, by way of example, the device 28 shown in fig. 4 may be an electric battery and/or a solar panel.

Fig. 3 depicts a flowchart of a computer-implemented method for controlling autonomous operation of an autonomous vehicle 200 in an area A according to example embodiments of the present invention. The autonomous vehicle 200 is controlled by the control system 100 as e.g. shown in fig. 4.

The method comprises:
S1: planning a desired travelling path T, T1 for the autonomous vehicle 200 by use of position information related to each anchor point device 1, 2, 3, 4, 5, 6 of the plurality of anchor point devices 1, 2, 3, 4, 5, 6.

The position information as used herein may for example be expressed as coordinates in the area A, e.g. according to a Cartesian coordinate system.

The method may further comprise:
S2: providing the desired travelling path T to a vehicle motion control unit 210 of the autonomous vehicle 200; and/or
S3: providing guiding instructions for the autonomous vehicle 200 so that it follows the desired travelling path T.

Additionally, or alternatively, the method may further comprise:
S4: during driving along the desired travelling path T, verifying at each respective anchor point by the information from the respective information providing device 22 that the autonomous vehicle 200 is travelling along the desired travelling path T. By way of example, if no information is received when it is expected to be received along the desired travelling path T, i.e. when the autonomous vehicle 200 is within the first range, the method may further comprise:
- instructing the autonomous vehicle 200 to stop and/or issuing a warning signal.

Step S2, S3 and S4 are optional steps, as depicted by boxes with dashed lines in fig. 3.

Additionally, or alternatively, the method may comprise:
- estimating a current position of the at least one movable anchor point device 2, 3, 4, 5 in the area A by use of a positioning unit 24 of the at least one movable anchor point device 2, 3, 4, 5, and
- providing the estimated current position to the control unit 10 by use of a communication unit 26 of the at least one movable anchor point device 2, 3, 4, 5.

Additionally, or alternatively, the method may comprise:
- providing information to the autonomous vehicle 200 from the information providing device 22 of at least one anchor point device 1, 2, 3, 4, 5, 6, such as from the information providing device 22 of the at least one movable anchor point device 2, 3, 4, 5, and
- localizing the autonomous vehicle 200 along the desired travelling path T, T1 by use of the provided information.

By way of example, the autonomous vehicle 200 may be localized by use of estimated position information from one or more of the anchor point devices 1, 2, 3, 4, 5, 6. Furthermore, the autonomous vehicle 200 may determine its position with respect to a detected anchor point device 1, 2, 3, 4, 5, 6 by use of an environment perception sensor, such as a LIDAR sensor or the like. As such, the position or pose in the area A of the autonomous vehicle 200 may in one embodiment be determined by the estimated position information from the detected anchor point device 1, 2, 3, 4, 5, 6 and by the position with respect to the detected anchor point device 1, 2, 3, 4, 5, 6, as determined by use of the environment perception sensor. Additionally, or alternatively, the position or pose in the area A of the autonomous vehicle 200 may be determined by use of a GNSS sensor as mentioned in the above.

Additionally, or alternatively, the method may comprise:
- providing information to the autonomous vehicle 200 from the information providing device 22 of at least one anchor point device 1, 2, 3, 4, 5, 6, such as from the information providing device 22 of the at least one movable anchor point device 2, 3, 4, 5, wherein the information is associated with a speed limit for the autonomous vehicle 200, and
- setting the speed limit as a maximum allowed speed for the autonomous vehicle 200.

Additionally, or alternatively, the method may comprise:
- providing information to the autonomous vehicle 200 from the information providing device 22 of at least one anchor point device 1, 2, 3, 4, 5, 6, such as from the information providing device 22 of the at least one movable anchor point device 2, 3, 4, 5, wherein the information is associated with a specific mission and/or driving mode for the autonomous vehicle 200, and
- initiating the specific mission and/or driving mode.

Additionally, or alternatively, the method may comprise:
- providing information to the autonomous vehicle from the information providing device of at least one anchor point device, such as from the information providing device of the at least one movable anchor point device, wherein the information is associated with a restricted area for the autonomous vehicle, and
- preventing the autonomous vehicle from driving in the restricted area.

Additionally, or alternatively, the method may comprise:
- utilizing an active mode and a reconfiguring mode, wherein the active mode comprises allowing autonomous operation of the autonomous vehicle 200, and wherein the reconfiguring mode comprises preventing the autonomous vehicle 200 from autonomous operation, wherein in the reconfiguring mode the at least one movable anchor point device 2, 3, 4, 5 is allowed to be moved.

Additionally, or alternatively, the method may comprise:
- switching from the reconfiguring mode to the active mode only after the control unit 10 has received an updated estimated current position from the communication unit 26.

Additionally, or alternatively, the method may comprise:
- only allowing use of the position information of the at least one movable anchor point device 2, 3, 4, 5 when it is provided in a sub-area within the area A.

Additionally, or alternatively, the method may comprise:
- only allowing use of the position information of the at least one movable anchor point device 2, 3, 4, 5 when it is provided within a second range d from another one of the plurality of anchor point devices 1, 2, 3, 4, 5, 6.

Additionally, or alternatively, the method may comprise:
- when the autonomous vehicle 200 is in an autonomous operation mode, issuing a warning signal to the autonomous vehicle 200, such as a signal indicative of stopping the autonomous vehicle 200, when it is determined that the at least one movable anchor point device 2, 3, 4, 5 has been moved to a new position.

Additionally, or alternatively, the method may comprise:
- in response to receiving an updated estimated position from the communication unit 26 of the at least one movable anchor point device 2, 3, 4, 5, replanning the desired travelling path T so that a new desired travelling path T1 for the autonomous vehicle 200 is obtained.

The method may be implemented as a computer program 11 comprising program code means for performing the method when said program is run on the control unit 10, or on the control unit 10 and on the vehicle motion control unit 210. The invention also relates to a computer readable medium carrying a computer program 11 comprising program code means for performing the method when said program product is run on the control unit 10.

## Claims

1. A control system (100) for controlling autonomous operation of an autonomous vehicle (200) in an area (A), the control system (100) comprising:
- a control unit (10) for planning a desired travelling path (T) for the autonomous vehicle (200),
- a plurality of anchor point devices (1-6),
- wherein each anchor point device (1-6) is arranged to be provided along the desired travelling path (T), wherein the control unit (10) is configured to plan the desired travelling path (T) by use of position information related to each anchor point device (1-6) of the plurality of anchor point devices (1-6), and wherein each anchor point device (1-6) comprises an information providing device (22) which is configured to provide the position information to the autonomous vehicle (200) when the autonomous vehicle (200) is within a first range from each anchor point device (1-6) during travelling along the desired travelling path (T), and
- wherein at least one of the plurality of anchor point devices (1-6) is configured to be movable in the area (A), **characterized in that** the at least one movable anchor point device (1-6) comprises:
- a positioning unit (24) arranged to estimate a current position of the at least one movable anchor point device (2-5) in the area (A), and
- a communication unit (26) arranged to provide the estimated current position to the control unit (10).

2. The control system (100) according to any one of the preceding claims, wherein the at least one movable anchor point device (2) comprises at least one first grip (21) grippable by a human and/or at least one second grip (21) grippable by a gripping device for lifting and moving the at least one movable anchor point device (2) in the area (A).

3. The control system (100) according to any one of the preceding claims, configured so that the position information provided to the autonomous vehicle (200) from the information providing device (22) of at least one anchor point device (1-6), such as from the information providing device (22) of the at least one movable anchor point device (2-5), is used for localizing the autonomous vehicle (200) along the desired travelling path (T).

4. The control system (100) according to any one of the preceding claims, configured so that the position information provided to the autonomous vehicle (200) from the information providing device (22) of at least one anchor point device (1-6), such as from the information providing device (22) of the at least one movable anchor point device (2-5), is used for verifying that the autonomous vehicle (200) is travelling along the desired travelling path (T).

5. The control system (100) according to any one of the preceding claims, configured so that the position information provided to the autonomous vehicle (200) from the information providing device (22) of at least one anchor point device (1-6), such as from the information providing device (22) of the at least one movable anchor point device (2-5), is associated with any one of, or any combination of, a speed limit for the autonomous vehicle (200), a specific mission and/or driving mode for the autonomous vehicle (200), and a restricted area for the autonomous vehicle (200).

6. The control system (100) according to any one of the preceding claims, configured to utilize an active mode and a reconfiguring mode, wherein in the active mode, autonomous operation of the autonomous vehicle (200) is allowed and, in the reconfiguring mode, the autonomous vehicle (200) is prevented from autonomous operation, and wherein in the reconfiguring mode the at least one movable anchor point device (2-5) is allowed to be moved.

7. The control system (100) according to any one of the preceding claims, wherein the control unit (10) is configured to only allow use of the position information of the at least one movable anchor point device (2-5) when the at least one movable anchor point device (2-5) is provided in a sub-area within the area (A).

8. The control system (100) according to any one of the preceding claims, wherein the control unit (10) is configured to only allow use of the position information of the at least one movable anchor point device when the at least one movable anchor point device is provided within a second range (d) from another one of the plurality of anchor point devices.

9. The control system (100) according to any one of the preceding claims, wherein, when the autonomous vehicle (200) is in an autonomous operation mode, the control unit (10) is configured to issue a warning signal to the autonomous vehicle (200), such as a signal indicative of stopping the autonomous vehicle (200), when it is determined that the at least one movable anchor point device (2-5) has been moved to a new position.

10. The control system (100) according to any one of the preceding claims, wherein, in response to the control unit (10) receiving an updated estimated position from the communication unit (26) of the at least one movable anchor point device (2-5), the control unit (10) is configured to replan the desired travelling path (T) so that a new desired travelling path (T1) for the autonomous vehicle (200) is obtained.

11. An anchor point device (2) for a control system (100) for controlling autonomous operation of an autonomous vehicle (200) in an area (A), wherein the anchor point device (2) is arranged to be provided along a desired travelling path (T) and wherein the anchor point device (2) comprises an information providing device (22) which is configured to provide information to the autonomous vehicle (200) when the autonomous vehicle (200) is within a first range from the anchor point device (2) during travelling along the desired travelling path (T), and wherein the anchor point device (2) is configured to be movable in the area (A), **characterized in that** the movable anchor point device (2) comprises:
- a positioning unit (24) arranged to estimate a current position of the at least one movable anchor point device (2) in the area (A), and
- a communication unit (26) arranged to provide the estimated current position to a control unit (10) of the control system (100).

12. An autonomous vehicle (200) configured to be controlled by a control system (100) according to any one of claims 1-10.

13. A computer-implemented method for controlling autonomous operation of an autonomous vehicle (200) in an area (A) by a control system (100) according to any one of claims 1-10, the method comprising:
- planning (S1) a desired travelling path (T) for the autonomous vehicle (200) by use of position information related to each anchor point device (1-6) of the plurality of anchor point devices (1-6)

14. A computer program comprising program code means for performing the method according to claim 13 when said program is run on the control unit (10) of the control system (100).

15. A computer readable medium carrying a computer program comprising program code means for performing the method according to claim 13 when said program product is run on the control unit (10) of the control system (100).

## Patentansprüche

1. Steuersystem (100) zum Steuern des autonomen Betriebs eines autonomen Fahrzeugs (200) in einem Bereich (A), wobei das Steuersystem (100) Folgendes umfasst:
- eine Steuereinheit (10) zum Planen einer gewünschten Fahrstrecke (T) für das autonome Fahrzeug (200),
- eine Vielzahl von Ankerpunktvorrichtungen (1-6),
- wobei jede Ankerpunktvorrichtung (1-6) angeordnet ist, entlang der gewünschten Fahrstrecke (T) bereitgestellt zu werden, wobei die Steuereinheit (10) dazu konfiguriert ist, die gewünschte Fahrstrecke (T) unter Verwendung von Positionsinformationen zu planen, die mit jeder Ankerpunktvorrichtung (1-6) der Vielzahl von Ankerpunktvorrichtungen (1-6) verbunden sind, und wobei jede Ankerpunktvorrichtung (1-6)
eine Informationsbereitstellungsvorrichtung (22) umfasst, die dazu konfiguriert ist, dem autonomen Fahrzeug (200) die Positionsinformationen bereitzustellen, wenn sich das autonome Fahrzeug (200) während der Fahrt entlang der gewünschten Fahrstrecke (T) innerhalb einer ersten Reichweite von jeder Ankerpunktvorrichtung (1-6) befindet, und
- wobei mindestens eine der Vielzahl von Ankerpunktvorrichtungen (1-6) dazu konfiguriert ist, innerhalb des Bereichs (A) beweglich zu sein, **dadurch gekennzeichnet, dass** die mindestens eine bewegliche Ankerpunktvorrichtung (1-6) Folgendes umfasst:
- eine Positionierungseinheit (24), die angeordnet ist, um eine aktuelle Position der mindestens einen beweglichen Ankerpunktvorrichtung (2-5) in dem Bereich (A) zu schätzen, und
- eine Kommunikationseinheit (26), die angeordnet ist, um der Steuereinheit (10) die geschätzte aktuelle Position bereitzustellen.

2. Steuersystem (100) nach einem der vorhergehenden Ansprüche, wobei die
mindestens eine bewegliche Ankerpunktvorrichtung (2) mindestens einen von einem Menschen greifbaren ersten Griff (21) und/oder mindestens einen von einer Greifvorrichtung greifbaren zweiten Griff (21) zum Anheben und Bewegen der mindestens einen beweglichen Ankerpunktvorrichtung (2) in dem Bereich (A) umfasst.

3. Steuersystem (100) nach einem der vorhergehenden Ansprüche, das so konfiguriert ist, dass die Positionsinformationen, die dem autonomen Fahrzeug (200) von der Informationsbereitstellungsvorrichtung (22) mindestens einer Ankerpunktvorrichtung (1-6), wie etwa von der Informationsbereitstellungsvorrichtung (22) der mindestens einen beweglichen Ankerpunktvorrichtung (2-5), bereitgestellt werden, zum Lokalisieren des autonomen Fahrzeugs (200) entlang der gewünschten Fahrstrecke (T) verwendet werden.

4. Steuersystem (100) nach einem der vorhergehenden Ansprüche, das so konfiguriert ist, dass die Positionsinformationen, die dem autonomen Fahrzeug (200) von der Informationsbereitstellungsvorrichtung (22) mindestens einer Ankerpunktvorrichtung (1-6), wie etwa von der Informationsbereitstellungsvorrichtung (22) der mindestens einen beweglichen Ankerpunktvorrichtung (2-5), bereitgestellt werden, zum Überprüfen, ob das autonome Fahrzeug (200) entlang der gewünschten Fahrstrecke (T) fährt, verwendet werden.

5. Steuersystem (100) nach einem der vorhergehenden Ansprüche, das so konfiguriert ist, dass die Positionsinformationen, die dem autonomen Fahrzeug (200) von der Informationsbereitstellungsvorrichtung (22) mindestens einer Ankerpunktvorrichtung (1-6), wie etwa von der Informationsbereitstellungsvorrichtung (22) der mindestens einen beweglichen Ankerpunktvorrichtung (2-5), bereitgestellt werden, in Verbindung mit einem beliebigen von einer Geschwindigkeitsbegrenzung für das autonome Fahrzeug (200), einem spezifischen Einsatz und/oder Fahrmodus für das autonome Fahrzeug (200) und einem eingeschränkten Bereich für das autonome Fahrzeug (200) oder einer Kombination davon stehen.

6. Steuersystem (100) nach einem der vorhergehenden Ansprüche, das dazu konfiguriert ist, einen aktiven Modus und einen Rekonfigurationsmodus anzuwenden, wobei der autonome Betrieb des autonomen Fahrzeugs (200) im aktiven Modus gestattet wird und das autonome Fahrzeug (200) im Rekonfigurationsmodus am autonomen Betrieb gehindert wird, und wobei es der mindestens einen beweglichen Ankerpunktvorrichtung (2-5) im Rekonfigurationsmodus gestattet ist, bewegt zu werden.

7. Steuersystem (100) nach einem der vorhergehenden Ansprüche, wobei die Steuereinheit (10) dazu konfiguriert ist, die Verwendung der Positionsinformationen der mindestens einen beweglichen Ankerpunktvorrichtung (2-5) nur zu gestatten, wenn die mindestens eine bewegliche Ankerpunktvorrichtung (2-5) in einem Teilbereich innerhalb des Bereichs (A) bereitgestellt ist.

8. Steuersystem (100) nach einem der vorhergehenden Ansprüche, wobei die Steuereinheit (10) dazu konfiguriert ist, die Verwendung der Positionsinformationen der mindestens einen beweglichen Ankerpunktvorrichtung nur zu gestatten, wenn sich die mindestens eine bewegliche Ankerpunktvorrichtung innerhalb einer zweiten Reichweite (d) von einer anderen der Vielzahl von Ankerpunktvorrichtungen befindet.

9. Steuersystem (100) nach einem der vorhergehenden Ansprüche, wobei, wenn sich das autonome Fahrzeug (200) in einem autonomen Betriebsmodus befindet, die Steuereinheit (10) dazu konfiguriert ist, ein Warnsignal an das autonome Fahrzeug (200) auszugeben, wie etwa ein Signal, das das Anhalten des autonomen Fahrzeugs (200) angibt, wenn bestimmt wird, dass die mindestens eine bewegliche Ankerpunktvorrichtung (2-5) an eine neue Position bewegt wurde.

10. Steuersystem (100) nach einem der vorhergehenden Ansprüche, wobei als Reaktion darauf, dass die Steuereinheit (10) eine aktualisierte geschätzte Position von der Kommunikationseinheit (26) der mindestens einen beweglichen Ankerpunktvorrichtung (2-5) empfängt, die Steuereinheit (10) dazu konfiguriert ist, die gewünschte Fahrstrecke (T) erneut zu planen, so dass eine neue gewünschte Fahrstrecke (T1) für das autonome Fahrzeug (200) erhalten wird.

11. Ankerpunktvorrichtung (2) für ein Steuersystem (100) zum Steuern des autonomen
Betriebs eines autonomen Fahrzeugs (200) in einem Bereich (A), wobei die Ankerpunktvorrichtung (2) angeordnet ist, entlang einer gewünschten Fahrstrecke (T) bereitgestellt zu werden, und wobei die Ankerpunktvorrichtung (2) eine Informationsbereitstellungsvorrichtung (22) umfasst, die dazu konfiguriert ist, dem autonomen Fahrzeug (200) Informationen bereitzustellen, wenn sich das autonome Fahrzeug (200) während der Fahrt entlang der gewünschten Fahrstrecke (T) innerhalb einer ersten Reichweite von der Ankerpunktvorrichtung (2) befindet, und wobei die Ankerpunktvorrichtung (2) dazu konfiguriert ist, in dem Bereich (A) beweglich zu sein, **dadurch gekennzeichnet, dass** die bewegliche Ankerpunktvorrichtung (2) Folgendes umfasst:
- eine Positionierungseinheit (24), die angeordnet ist, um eine aktuelle Position der mindestens einen beweglichen Ankerpunktvorrichtung (2) in dem Bereich (A) zu schätzen, und
- eine Kommunikationseinheit (26), die angeordnet ist, um einer Steuereinheit (10) des Steuersystems (100) die geschätzte aktuelle Position bereitzustellen.

12. Autonomes Fahrzeug (200), das dazu konfiguriert ist, durch ein Steuersystem (100) nach einem der Ansprüche 1-10 gesteuert zu werden.

13. Computerimplementiertes Verfahren zum Steuern des autonomen Betriebs eines autonomen Fahrzeugs (200) in einem Bereich (A) durch ein Steuersystem (100) nach einem der Ansprüche 1-10, wobei das Verfahren Folgendes umfasst:
- Planen (S1) einer gewünschten Fahrstrecke (T) für das autonome Fahrzeug (200) unter Verwendung von Positionsinformationen, die mit jeder Ankerpunktvorrichtung (1-6) der Vielzahl von Ankerpunktvorrichtungen (1-6) verbunden sind.

14. Computerprogramm, das Programmcodemittel zum Durchführen des Verfahrens nach Anspruch 13 umfasst, wenn das Programm in der Steuereinheit (10) des Steuersystems (100) ausgeführt wird.

15. Computerlesbares Medium, das ein Computerprogramm enthält, das Programmcodemittel zum Durchführen des Verfahrens nach Anspruch 13 umfasst, wenn das Programmprodukt in der Steuereinheit (10) des Steuersystems (100) ausgeführt wird.

## Revendications

1. Système de commande (100) pour commander le fonctionnement autonome d'un véhicule autonome (200) dans une zone (A), le système de commande (100) comprenant :
- une unité de commande (10) pour la planification d'une trajectoire de déplacement souhaitée (T) pour le véhicule autonome (200),
- une pluralité de dispositifs de point d'ancrage (1-6),
- chaque dispositif de point d'ancrage (1-6) étant agencé pour être disposé le long de la trajectoire de déplacement souhaitée (T), l'unité de commande (10) étant configurée pour planifier la trajectoire de déplacement souhaitée (T) en utilisant des informations de position relatives à chaque dispositif de point d'ancrage (1-6) de la pluralité de dispositifs de point d'ancrage (1-6), et chaque dispositif de point d'ancrage (1-6) comprenant un dispositif de fourniture d'informations (22) qui est configuré pour fournir les informations de position au véhicule autonome (200) lorsque le véhicule autonome (200) se trouve dans une première plage de chaque dispositif de point d'ancrage (1-6) pendant le déplacement le long de la trajectoire de déplacement souhaitée (T), et
- au moins l'un de la pluralité de dispositifs de point d'ancrage (1-6) étant configuré pour être mobile dans la zone (A), **caractérisé en ce que** l'au moins un dispositif de point d'ancrage mobile (1-6) comprend :
- une unité de positionnement (24) agencée pour estimer une position actuelle de l'au moins un dispositif de point d'ancrage mobile (2-5) dans la zone (A), et
- une unité de communication (26) agencée pour fournir la position actuelle estimée à l'unité de commande (10).

2. Système de commande (100) selon l'une quelconque des revendications précédentes, dans lequel l'au moins un dispositif de point d'ancrage mobile (2) comprend au moins une première poignée (21) pouvant être saisie par un être humain et/ou au moins une seconde poignée (21) pouvant être saisie par un dispositif de préhension pour soulever et déplacer l'au moins un dispositif de point d'ancrage mobile (2) dans la zone (A).

3. Système de commande (100) selon l'une quelconque des revendications précédentes, configuré de sorte que les informations de position fournies au véhicule autonome (200) par le dispositif de fourniture d'informations (22) d'au moins un dispositif de point d'ancrage (1-6), telles que par le dispositif de fourniture d'informations (22) de l'au moins un dispositif de point d'ancrage mobile (2-5), sont utilisées pour localiser le véhicule autonome (200) le long de la trajectoire de déplacement souhaitée (T).

4. Système de commande (100) selon l'une quelconque des revendications précédentes, configuré de sorte que les informations de position fournies au véhicule autonome (200) par le dispositif de fourniture d'informations (22) d'au moins un dispositif de point d'ancrage (1-6), telles que par le dispositif de fourniture d'informations (22) de l'au moins un dispositif de point d'ancrage mobile (2-5), sont utilisées pour vérifier que le véhicule autonome (200) se déplace le long de la trajectoire de déplacement souhaitée (T).

5. Système de commande (100) selon l'une quelconque des revendications précédentes, configuré de sorte que les informations de position fournies au véhicule autonome (200) par le dispositif de fourniture d'informations (22) d'au moins un dispositif de point d'ancrage (1-6), telles que par le dispositif de fourniture d'informations (22) dudit au moins un dispositif de point d'ancrage mobile (2-5), sont associées à l'une quelconque d'un, ou toute combinaison, d'une limite de vitesse pour le véhicule autonome (200), d'une mission spécifique et/ou d'un mode de conduite pour le véhicule autonome (200), et d'une zone restreinte pour le véhicule autonome (200).

6. Système de commande (100) selon l'une quelconque des revendications précédentes, configuré pour utiliser un mode actif et un mode de reconfiguration, sachant que, dans le mode actif, le fonctionnement autonome du véhicule autonome (200) est autorisé et que, dans le mode de reconfiguration, le véhicule autonome (200) est empêché de fonctionner de manière autonome, et que, dans le mode de reconfiguration, l'au moins un dispositif de point d'ancrage mobile (2-5) est autorisé à être déplacé.

7. Système de commande (100) selon l'une quelconque des revendications précédentes, dans lequel l'unité de commande (10) est configurée pour permettre uniquement l'utilisation des informations de position de l'au moins un dispositif de point d'ancrage mobile (2-5) lorsque l'au moins un dispositif de point d'ancrage mobile (2-5) est prévu dans une sous-zone à l'intérieur de la zone (A).

8. Système de commande (100) selon l'une quelconque des revendications précédentes, dans lequel l'unité de commande (10) est configurée pour permettre l'utilisation des informations de position de l'au moins un dispositif de point d'ancrage mobile uniquement lorsque l'au moins un dispositif de point d'ancrage mobile est prévu dans une seconde plage (d) d'un autre de la pluralité de dispositifs de point d'ancrage.

9. Système de commande (100) selon l'une quelconque des revendications précédentes, dans lequel, lorsque le véhicule autonome (200) est dans un mode de fonctionnement autonome, l'unité de commande (10) est configurée pour émettre un signal d'avertissement vers le véhicule autonome (200), tel qu'un signal indiquant l'arrêt du véhicule autonome (200), lorsqu'il est déterminé que l'au moins un dispositif de point d'ancrage mobile (2-5) a été déplacé vers une nouvelle position.

10. Système de commande (100) selon l'une quelconque des revendications précédentes, dans lequel, en réponse à la réception par l'unité de commande (10) d'une position estimée mise à jour de l'unité de communication (26) de l'au moins un dispositif de point d'ancrage mobile (2-5), l'unité de commande (10) est configurée pour replanifier la trajectoire souhaitée (T) de sorte qu'une nouvelle trajectoire de déplacement souhaitée (T1) pour le véhicule autonome (200) soit obtenue.

11. Dispositif de point d'ancrage (2) pour système de commande (100) destiné à commander le fonctionnement autonome d'un véhicule autonome (200) dans une zone (A), dans lequel le dispositif de point d'ancrage (2) est agencé pour être disposé le long d'une trajectoire de déplacement souhaitée (T) et le dispositif de point d'ancrage (2) comprend un dispositif de fourniture d'informations (22) qui est configuré pour fournir des informations au véhicule autonome (200) lorsque le véhicule autonome (200) se trouve dans une première plage du dispositif de point d'ancrage (2) pendant le déplacement le long de la trajectoire de déplacement souhaitée (T), et le dispositif de point d'ancrage (2) est configuré pour être mobile dans la zone (A), **caractérisé en ce que** le dispositif de point d'ancrage mobile (2) comprend :
- une unité de positionnement (24) agencée pour estimer une position actuelle de l'au moins un dispositif de point d'ancrage mobile (2) dans la zone (A), et
- une unité de communication (26) conçue pour fournir la position actuelle estimée à une unité de commande (10) du système de commande (100).

12. Véhicule autonome (200) configuré pour être commandé par un système de commande (100) selon l'une quelconque des revendications 1 à 10.

13. Procédé mis en œuvre par ordinateur pour commander le fonctionnement autonome d'un véhicule autonome (200) dans une zone (A) par un système de commande (100) selon l'une quelconque des revendications 1 à 10, le procédé comprenant :
- la planification (S1) d'une trajectoire de déplacement souhaitée (T) pour le véhicule autonome (200) au moyen d'informations de position relatives à chaque dispositif de point d'ancrage (1-6) de la pluralité de dispositifs de point d'ancrage (1-6)

14. Programme informatique comprenant un moyen de code de programme pour exécuter le procédé selon la revendication 13 lorsque ledit programme est exécuté sur l'unité de commande (10) du système de commande (100).

15. Support lisible par ordinateur comportant un programme informatique comprenant un moyen de code de programme pour exécuter le procédé selon la revendication 13 lorsque ledit produit de programme est exécuté sur l'unité de commande (10) du système de commande (100).
